# EUROPÄISCHE PATENTSCHRIFT

(11) **EP 3 324 879 B1**
(45) Veröffentlichungstag und Bekanntmachung des Hinweises auf die Patenterteilung: **10.07.2019**
(21) Anmeldenummer: 16753253.0
(22) Anmeldetag: 20.07.2016
(51) Int. Cl.: A61C 13/00, A61C 13/01, A61C 13/225

(54) **PLANUNG EINER REPARATUR ODER ANPASSUNG EINER DENTALEN TEILPROTHESE**
PLANNING REPAIR OR ADJUSTMENT OF A PARTIAL DENTAL PROSTHESIS
PLANIFICATION D'UN RÉPARATION OU AJUSTAGE D'UNE PROTHÈSE DENTAIRE PARTIELLE

(30) Priorität: 21.07.2015 DE 102015213682
(43) Veröffentlichungstag der Anmeldung: 30.05.2018
(73) Patentinhaber: Sirona Dental Systems GmbH, 64625 Bensheim (DE)
(72) Erfinder: OSKAM, Thomas, 8200 Schaffhausen (CH)
(74) Vertreter: Sommer, Peter
(86) Internationale Anmeldenummer: PCT/EP2016/067228
(87) Internationale Veröffentlichungsnummer: WO 2017/013142

(56) Entgegenhaltungen:
- GB-A- 2 496 981
- US-A1- 2012 290 118

## Beschreibung

### Technisches Gebiet

Die Erfindung betrifft ein Verfahren zur digitalen Planung einer Reparatur oder Anpassung einer dentalen Teilprothese.

### Stand der Technik

Typische Aufgabe eines Dentallabors ist neben der Herstellung von Zahnersatzteilen, bekannt aus GB 2 496 981 A oder US 2012/2901188 A1, auch das Reparieren von schadhaften Zahnersatzteilen oder das Ergänzen eines bestehenden Zahnersatzteils, beispielsweise zur Versorgung neuer Fehlstellen in einem Kiefer. Ein typischer Fall ist das Ersetzen einer oder mehrerer abgebrochener Klammern eines Modellgusses. Aufwändig ist hierbei insbesondere das nachträgliche Abschätzen der ursprünglichen Einschubachse der Teilprothese. Dieser Schritt ist jedoch sowohl für die Reparatur als auch für Ergänzungsarbeiten notwendig, um eine korrekte Hinterschnitttiefe für bereits bestehende Klammern sowie für ergänzte Klammern und/oder Bereiche zu gewährleisten und um sicherzustellen, dass Teile, wie Gegenklammern und Führungsklammern, keine Hinterschnitttiefe aufweisen.

Aufgabe der vorliegenden Erfindung ist es, den Stand der Technik weiterzubilden sowie ein einfaches und zuverlässiges Verfahren zur Reparatur oder Anpassung dentaler Teilprothesen bereitzustellen.

### Darstellung der Erfindung

Ein Gegenstand der Erfindung ist ein Verfahren zur rechnergestützten Planung einer Reparatur oder Anpassung einer dentalen Teilprothese mit den folgenden Verfahrensschritten: Erzeugen eins ersten digitalen 3D-Modells eines. Kiefers mit der am Kiefer positionierten Teilprothese als Prothesenreferenzmodell; Erzeugen eines zweiten digitalen 3D-Modells des Kiefers ohne die Teilprothese als Kiefermodell; Bestimmen einer Lagebeziehung des Prothesenreferenzmodells zum Kiefermodell; Erzeugen eines digitalen Prothesenmodells durch Subtraktion des Kiefermodells vom Prothesenreferenzmodell unter Berücksichtigung der Lagebeziehung; Automatisches und/oder durch einen Anwender ausgeführtes Identifizieren von Halte- und/oder Stützelementen im Prothesenmodell; Berechnen einer Einschubachse der Teilprothese anhand des Prothesenmodells; Berechnen von aus der Einschubachse resultierenden Hinterschnitttiefen der Halte- und/oder Stützelemente der Teilprothese; Anzeigen der Einschubachse und der Hinterschnitttiefen innerhalb der Darstellung des Kiefermodells.

Eine dentale Teilprothese besteht aus einem Gerüst, welches eine Basis, z.B. einem Sublingualbügel oder einem transversalen Band, und Halte- und Stützelementen, z.B. Klammern, umfasst. An dem Gerüst werden Prothesensättel und künstliche Zähne befestigt.

Die digitalen 3D-Modelle des Kiefers mit und ohne Teilprothese werden mittels eines Scans, z.B. eines Scans eines mittels eines Abdrucks des Kiefers erzeugten Gipsmodells oder eines direkten Scans des Kiefers mittels einer nach dem Triangulationsverfahren arbeitenden Intraoral-Kamera, erzeugt.

Aus den hierdurch bereitgestellten Daten bzw. dem hieraus berechneten Prothesenmodell ist es möglich, eine Einschubachse zu bestimmen, welche die Form der Teilprothese und die Position der Halte- und Stützelemente berücksichtigt und dadurch der ursprünglich für die Teilprothese konzipierten Einschubachse zumindest näherungsweise entspricht.

Das Anzeigen und das automatische Anpassen der angezeigten Hinterschnitttiefen bei Veränderung der Einschubachse ermöglichen eine einfache und ständige Kontrolle der Hinterschnitttiefen sowie des Auftretens von Hinterschnitten beim Verändern der Einschubachse durch den Anwender. Ferner wird durch das Anzeigen und Anpassen der Hinterschnitttiefen sichergestellt, dass beim Ergänzen weiterer Halte- und Stützelemente diese die gewünschte Zugkraft generieren.

Vorteilhafterweise wird die vorgeschlagene Einschubachse mittels eines Eingabemittels durch einen Anwender verändert und werden die Hinterschnitttiefen automatisch neu berechnet, so hat der Anwender direkt alle wichtigen Kriterien im Blick und kann einfach und schnell eine korrekte Einschubachse abschätzen bzw. bestimmen.

Vorteilhafterweise wird das Kiefermodell unter Berücksichtigung der Einschubachse ausgeblockt und das Prothesenmodell auf das ausgeblockte Kiefermodell aufgesetzt und mittels eines Eingabemittels durch einen Anwender ergänzt und oder verändert. So sind sowohl eine direkte Kontrolle während der Konstruktion als auch eine anschließende, einfache und direkte computergestütze Herstellung der zu ergänzenden Teile bzw. Bereiche der Teileprothese möglich.

Vorteilhafterweise wird ein drittes digitales 3D-Modell einer Unterseite der Teilprothese erzeugt und eine Unterseite des Prothesenmodells durch das dritte digitale 3D-Modell ergänzt und/oder ersetzt, so dass das Prothesenmodell möglichst genau mit der realen Teilprothese übereinstimmt.

Vorteilhafterweise werden vor und/oder nach dem Berechnen der Einschubachse und der Hinterschnitttiefen zu überwachende Bereiche in einer Darstellung des Kiefermodells automatisch und/oder mittels eines Eingabemittels markiert, wobei die Berechnung der Hinterschnitttiefen für diese Bereiche vorgenommen und angezeigt wird, so dass eine einfache und zuverlässige Kontrolle der Hinterschnitttiefen beispielsweise auch für neu zu setzenden Halte- und Stützelemente oder zu ergänzende andere Teile der Teilprothese möglich ist.

Vorteilhafterweise werden vor dem Berechnen der Einschubachse Bereiche für zu ergänzende Halte- und Stützelemente auf dem Kiefermodell markiert und bei der Berechnung der Einschubachse berücksichtigt. Ist schon vorab bekannt, wie bzw. wo die neuen bzw. zu ergänzenden Halte- und Stützelemente verlaufen sollen, so kann durch das Markieren und Berücksichtigen dieser Bereiche das Ergebnis der Berechnung der Einschubachse verbessert werden kann.

Vorteilhafterweise wird die Hinterschnitttiefe durch ein Einfärben der Oberfläche des Kiefermodells in Falschfarben visualisiert, so dass sie für den Anwender einfach und direkt wahrnehmbar ist.

Vorteilhafterweise werden anhand des Prothesenmodells, des Kiefermodells und der Einschubachse Bereiche ermittelt und im Kiefermodell angezeigt, welche mögliche Verkeilungen verursachen könnten. Verkeilungen können anhand des Kiefermodells und des Prothesenmodells zumindest abgeschätzt werden und dem Anwender als Warnung beispielsweise durch ein farbliches hervorheben der entsprechenden Oberflächenbereiche im Kiefermodell angezeigt werden.

### Kurzbeschreibung der Zeichnungen

Ausführungsbeispiele der Erfindung sind in der Zeichnung dargestellt. Es zeigt die
- Fig. 1: ein erstes digitales 3D-Modell eines Kiefers mit einer positionierten Teilprothese, die
- Fig. 2: ein zweites digitales 3D-Modell eines Kiefers ohne eine positionierte Teilprothese, die
- Fig. 3: ein Prothesenmodell,
- Fig. 4: eine Anzeige von Hinterschnitttiefen und Einschubachse innerhalb eines digitalen 3D-Modells des Kiefers.

### Ausführungsbeispiele

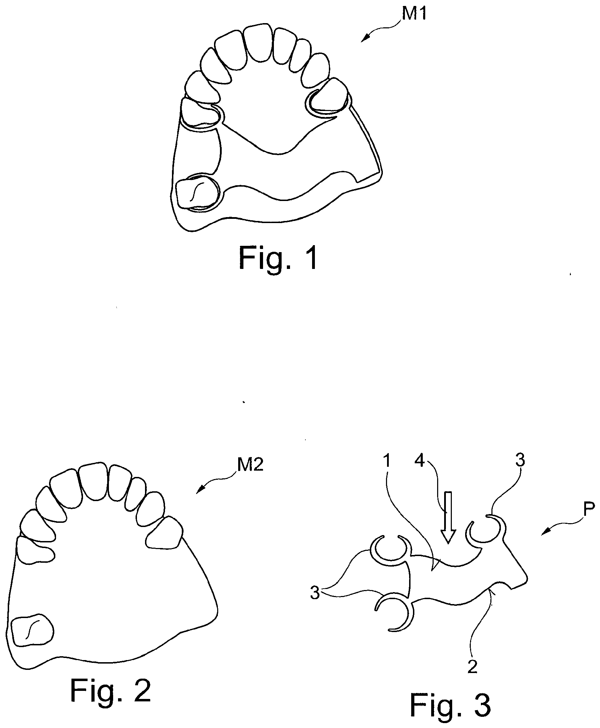

Die Figuren 1 bis 4 veranschaulichen schematisch das erfindungsgemäße Verfahren. Figur 1 zeigt ein erste digitale 3D-Modell, welches durch Scannen eines Kiefers oder eines mittels eines Abdrucks des Kiefer erzeugten Gipsmodells mit einer darauf positionierten Teilprothese erzeugt und als Prothesenreferenzmodell M1 abgespeichert wird. In Figur 2 ist ein zweites 3D-Modell skizziert, welches den Kiefer ohne die Teilprothese zeigt, ebenfalls mittels eines entsprechenden Scans erzeugt und als Kiefermodell M2 abgespeichert wird.

Anschließend wird eine Lagebeziehung zwischen dem Prothesenreferenzmodell M1 und dem Kiefermodell M2 bestimmt. Dies kann beispielsweise automatisch anhand von übereinstimmenden Bereichen geschehen, die mittels bekannter Algorithmen identifiziert werden. Insbesondere wenn die überlappenden Bereiche zur automatischen Ermittlung der Lagebeziehung nicht ausreichen, kann die Lagebeziehung auch teilweise oder vollständig manuell ermittelt werden.

Durch Subtraktion der zueinander ausgerichteten 3D-Modelle M1, M2 wird ein Prothesenmodell P berechnet (Figur 3), welches als Oberseite 1 eine im Prothesenreferenzmodell M1 enthaltene Oberseite der Teilprothese aufweist. Eine Unterseite 2 des Prothesenmodells P, die sich aus der Subtraktion ergibt entspricht nur näherungsweise einer Unterseite der Prothese, da hierfür nicht alle Informationen in dem Prothesenreferenzmodell M1 und dem Kiefermodell M2 enthalten sind. Optional kann mittels eines Scans der Unterseite der Teilprothese ein drittes digitales 3D-Modell M3 erzeugt und die Unterseite 2 des Prothesenmodells P durch diese Daten ersetzt bzw. ergänzt werden (nicht dargestellt).

Wie in Figur 3 skizziert, wird auch das Prothesenmodell P einem Anwender angezeigt, so dass dieser mittels eines Eingabemittels Halte- und Stützelemente 3, z.B. Klammern mittels eines Eingabemittels (nicht dargestellt) markieren oder Positionen von automatisch erkannten Halte- und Stützelementen 3 bestätigen oder korrigieren kann.

Anhand des Prothesenmodells P und der darin erkannten Halte- und Stützelemente 3 wird anschließend automatisch eine mögliche Einschubachse 4 ermittelt und dem Anwender beispielsweise mittels eines Pfeils, wie in Figur 3, angezeigt. "Möglich" in Bezug auf die Einschubachse 4 bedeutet, dass die vorgeschlagene Einschubachse 4 vorab hinterlegten Randbedingungen hinsichtlich der Hinterschnitttiefen der berücksichtigten Halte- und Stützelemente 3 genügt.

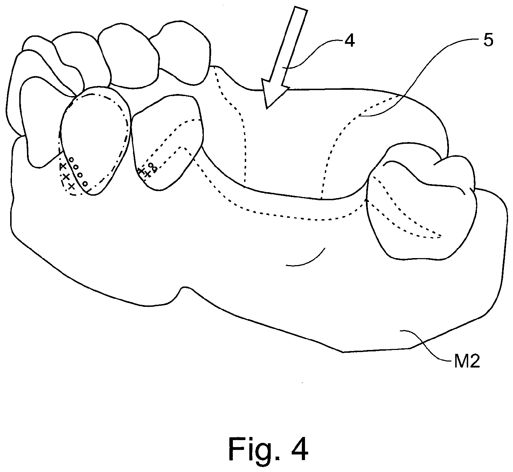

Die aus der vorgeschlagenen Einschubachse 4 resultierenden Hinterschnitttiefen werden anhand des Prothesenmodells P, des Kiefermodells M2 und der Erkannten Halte- und Stützelemente 3 ermittelt und im Kiefermodell M2, z.B. mittels Falschfarben, angezeigt. In Figur 4 ist eine Auflagefläche 5 der Teilprothese auf dem Kiefer mittels einer gepunkteten Linie skizziert, die anhand des Kiefermodells M1 und des Prothesenreferenzmodells M1 oder des Prothesenmodells P ermittelt wird. Die Hinterschnitttiefen sind durch Kreuze und Kreise angedeutet. Die Hinterschnitttiefen werden im Bereich der Auflagebefläche 5 der Teilprothese, insbesondere in den Bereichen der Halte- und Stützelemente 3 ermittelt.

Zusätzlich zur Markierung und/oder automatischen Erkennung vorhandener Halte- und Stützelemente 3 können in einem weiteren Verfahrensschritt Bereiche innerhalb des Kiefermodells M2 automatisch und/oder durch den Anwender ausgewählt werden (strichpunktierte Linie in Figur 4), für welche anschließend Hinterschnitttiefen ermittelt und angezeigt werden. So können die Hinterschnitttiefen für Bereiche des Kiefers, auf welche neue Halte- und Stützelemente gesetzt werden sollen, ermittelt und beim Setzen der neuen Halte- und Stützelemente berücksichtigt werden.

Dieser Verfahrensschritt kann vor und/oder nach dem Berechnen der Einschubachse ausgeführt werden.

Stehen Bereiche für zu ergänzende Halte- und Stützelemente oder andere zu ergänzende Teile bereits vor der Berechnung der Einschubachse 4 fest und werden schon vorab in dem Kiefermodell markiert, so können diese Bereiche als weitere Halte- und Stützelemente bei der Berechnung der Einschubachse 4 berücksichtigt und so das Ergebnis verbessern werden.

Mittels eines Eingabemittels kann dem Anwender die Möglichkeit gegeben werden, die vorgeschlagene Einschubachse 4 zu verändern, wobei alle angezeigten Hinterschnitttiefen innerhalb des Kiefermodells M2 automatisch an die Änderungen angepasst werden.

Zusätzlich können in einem weiteren optionalen Verfahrensschritt anhand des Prothesenmodells P, des Kiefermodells M2 und der Einschubachse 4 Bereiche im Kiefer ermittelt und im Kiefermodell M2 angezeigt werden, welche mögliche Verkeilungen verursachen könnten (nicht dargestellt). Wurde die Unterseite 2 des Prothesenmodells P durch die Informationen des dritten 3D-Modells M3 ergänzt, so sind diese Bereiche eindeutig identifizierbar. Ohne einen solchen zusätzlichen Scan können zumindest Wahrscheinlichkeiten ermittelt und entsprechende Warnungen angezeigt werden.

In einem anschließenden Verfahrensschritt wird das Kiefermodell M1 ausgeblockt. Dabei werden alle sich aus der Einschubachse 4 ergebenden Hinterschnittbereiche im Kiefermodell M1 aufgefüllt und anschließend die Füllung in den Auflagebereichen der Halte- und Stützelemente wieder entfernt. Da die Auflagebereiche der Halte- und Stützelemente bereits bekannt sind, ist es auch möglich, diese Bereiche beim Ausblocken auszusparen. Ausgeblockt wird typischerweise mit einem kleinen Neigungswinkel von z.B. 2° bis 8°.

In einem anschließenden Konstruktionsschritt wird das Prothesenmodell P auf das ausgeblockte Kiefermodell M1 aufgesetzt und mittels eines Eingabemittels durch den Anwender Veränderungen bzw. Ergänzungen am Prothesenmodell P vorgenommen, z.B. Halte- und Stützelemente 3 und/oder Retentionsplatten und Überlappungsbereiche für die Befestigung ergänzt und/oder verändert, wobei die Auswirkungen der Veränderungen hinsichtlich Hinterschnitttiefen und/oder Verkeilungen zur Kontrolle auf dem ausgeblockten Kiefermodell M2 angezeigt werden.

Ist die Ergänzung des Prothesenmodell P abgeschlossen, können die ergänzten Teile anschließend beispielsweise mittels einer CAM-Vorrichtung anhand der vorliegenden digitalen Daten erzeugt und beispielsweise durch Verlöten der Überlappungsbereiche an der Teilprothese befestigt werden.

### Bezugszeichenliste

- 1: Oberseite des Prothesenmodells
- 2: Unterseite des Protehsenmodells
- 3: Halte- und Stützelemente
- 4: Einschubachse
- 5: Auflagefläche der Teilprothese
- M1: Prothesenreferenzmodell
- M2: Kiefermodell
- P: Prothesenmodell

## Patentansprüche

1. Verfahren zur rechnergestützten Planung einer Reparatur oder Anpassung einer dentalen Teilprothese mit den Verfahrensschritten:
a) Erzeugen eines ersten digitalen 3D-Modells eines Kiefers mit der am Kiefer positionierten Teilprothese als Prothesenreferenzmodell (M1),
b) Erzeugen eines zweiten digitalen 3D-Modells des Kiefers ohne die Teilprothese als Kiefermodell(M2),
c) Bestimmen einer Lagebeziehung des Prothesenreferenzmodells (M1) zum Kiefermodell (M2),
d) Erzeugen eines digitalen Prothesenmodells (P) durch Subtraktion des Kiefermodells (M2) vom Prothesenreferenzmodell (M1) unter Berücksichtigung der Lagebeziehung,
e) Automatisches und/oder durch einen Anwender ausgeführtes Identifizieren von Halte- und/oder Stützelementen (3) im Prothesenmodell (P),
f) Berechnen einer Einschubachse (4) der Teilprothese anhand des Prothesenmodells (P),
g) Berechnen von aus der Einschubachse (4) resultierenden Hinterschnitttiefen der Halte- und/oder Stützelemente (3) im Prothesenmodell (P),
h) Anzeigen der Einschubachse (4) und der Hinterschnitttiefen innerhalb einer Darstellung des Kiefermodells (M2).

2. Verfahren nach Anspruch 1, **dadurch gekennzeichnet, dass** die vorgeschlagene Einschubachse (4) mittels eines Eingabemittels durch den Anwender verändert wird und im Kiefermodell (M2) angezeigte Hinterschnitttiefen automatisch neu berechnet werden.

3. Verfahren nach Anspruch 1 oder 2, **dadurch gekennzeichnet, dass** das Kiefermodell (M2) unter Berücksichtigung der Einschubachse (4) ausgeblockt wird, dass das Prothesenmodell (P) auf das ausgeblockte Kiefermodell (M2) aufgesetzt wird und dass das Prothesenmodell (P) mittels eines Eingabemittels durch einen Anwender ergänzt und/oder verändert wird.

4. Verfahren nach einem der Ansprüche 1 bis 3, **dadurch gekennzeichnet, dass** ein drittes digitales 3D-Modell einer Unterseite der Teilprothese erzeugt und eine Unterseite (2) des Prothesenmodells (P) durch das dritte digitale 3D-Modell ergänzt und/oder ersetzt wird.

5. Verfahren nach einem der Ansprüche 1 bis 4, **dadurch gekennzeichnet, dass** vor und/oder nach dem Berechnen der Einschubachse (4) und der Hinterschnitttiefen zu überwachende Bereiche in dem Kiefermodell (M2) automatisch und/oder mittels eines Eingabemittels markiert und für diese Bereiche Hinterschnitttiefen berechnet und im Kiefermodell (M2) angezeigt werden.

6. Verfahren nach einem der Ansprüche 1 bis 5, **dadurch gekennzeichnet, dass** vor dem Berechnen der Einschubachse (4) Bereiche für zu ergänzende Halte- und Stützelemente (3) auf dem Kiefermodell (M2) markiert und bei der Berechnung der Einschubachse (4) berücksichtigt werden.

7. Verfahren nach einem der Ansprüche 1 bis 6, **dadurch gekennzeichnet, dass** die Hinterschnitttiefe durch ein Einfärben der Oberfläche des Kiefermodells (M2) in Falschfarben visualisiert wird.

8. Verfahren nach einem der Ansprüche 1 bis 7, **dadurch gekennzeichnet, dass** anhand des Prothesenmodells (P), des Kiefermodells (M2) und der Einschubachse (4) Bereiche ermittelt und im Kiefermodell (M2) angezeigt werden, welche Verkeilungen verursachen könnten.

## Claims

1. A method for computer-aided planning of a repair or adjustment of a dental partial prosthesis with the following method steps:
a) generation of a first digital 3D model of a jaw with the partial prosthesis positioned on the jaw as a prosthesis reference model (M1),
b) generation of a second digital 3D model of the jaw without the partial prosthesis as a jaw model (M2),
c) determination of a positional relationship of the prosthesis reference model (M1) to the jaw model (M2),
d) generation of a digital prosthesis model (P) by subtracting the jaw model (M2) from the prosthesis reference model (M1) while taking the positional relationship into account,
e) automatic identification, or identification carried out by a user, of holding and/or support elements (3) in the prosthesis model (P),
f) calculation of an insertion axis (4) of the partial prosthesis on the basis of the prosthesis model (P),
g) calculation of undercut depths of the holding and/or support elements (3), resulting from the insertion axis (4), in the prosthesis model (P),
h) display of the insertion axis (4) and the undercut depths in a presentation of the jaw model (M2).

2. The method according to Claim 1, **characterized in that** the proposed insertion axis (4) is changed by the user by means of input means, and undercut depths displayed in the jaw model (M2) are automatically recalculated.

3. The method according to Claim 1 or 2, **characterized in that** the jaw model (M2) is blocked out by taking the insertion axis (4) into account, the prosthesis model (P) is placed on the blocked out jaw model (M2), and the prosthesis model (P) is supplemented and/or changed by a user by means of input means.

4. The method according to one of Claims 1 to 3,
**characterized in that** a third digital 3D model of a lower side of the partial prosthesis is generated and a lower side (2) of the prosthesis model (P) is supplemented and/or replaced by the third digital 3D model.

5. The method according to one of Claims 1 to 4,
**characterized in that** prior to and/or after calculating the insertion axis (4) and the undercut depths, areas to be monitored are automatically marked and/or marked by means of input means in the jaw model (M2), and undercut depths are calculated for these areas and are displayed in the jaw model (M2).

6. The method according to one of Claims 1 to 5,
**characterized in that** areas for holding and support elements (3) to be added are marked on the jaw model (M2) prior to the calculation of the insertion axis (4) and are taken into account during the calculation of the insertion axis (4).

7. The method according to one of Claims 1 to 6,
**characterized in that** the undercut depths are visualized by coloring the surface of the jaw model (M2) in false colors.

8. The method according to one of Claims 1 to 7,
**characterized in that** areas which might cause wedging are determined on the basis of the prosthesis model (P), the jaw model (M2), and the insertion axis (4), and are displayed in the jaw model (M2).

## Revendications

1. Procédé de planification assistée par ordinateur d'une réparation ou d'un ajustement d'une prothèse partielle dentaire comprenant les étapes de procédé suivantes :
a) production d'un premier modèle 3D numérique d'une mâchoire avec la prothèse partielle positionnée sur la mâchoire, en guise de modèle de référence de prothèse (M1),
b) production d'un deuxième modèle 3D numérique de la mâchoire sans la prothèse partielle, en guise de modèle de mâchoire (M2),
c) détermination d'une relation de position entre le modèle de référence de prothèse (M1) et le modèle de mâchoire (M2),
d) production d'un modèle de prothèse numérique (P) en soustrayant le modèle de mâchoire (M2) du modèle de référence de prothèse (M1) en tenant compte de la relation de position,
e) identification automatique, et/ou réalisée par un utilisateur, d'éléments de maintien et/ou de support (3) dans le modèle de prothèse (P),
f) calcul d'un axe d'insertion (4) de la prothèse partielle à l'aide du modèle de prothèse (P),
g) calcul de profondeurs de contre-dépouille, résultant de l'axe d'insertion (4), des éléments de maintien et/ou de support (3) dans le modèle de prothèse (P),
h) affichage de l'axe d'insertion (4) et des profondeurs de contre-dépouille à l'intérieur d'une représentation du modèle de mâchoire (M2).

2. Procédé selon la revendication 1, **caractérisé en ce que** l'axe d'insertion (4) proposé est modifié par l'utilisateur par le biais d'un moyen de saisie et les profondeurs de contre-dépouille affichées sur le modèle de mâchoire (M2) sont recalculées automatiquement.

3. Procédé selon la revendication 1 ou 2, **caractérisé en ce que** le modèle de mâchoire (M2) est comblé en tenant compte de l'axe d'insertion (4), **en ce que** le modèle de prothèse (P) est placé sur le modèle de mâchoire (M2) comblé et **en ce que** le modèle de prothèse (P) est complété et/ou modifié par un utilisateur par le biais d'un moyen de saisie.

4. Procédé selon une des revendications 1 à 3, **caractérisé en ce qu'**un troisième modèle 3D numérique d'une face inférieure de la prothèse partielle est produit et une face inférieure (2) du modèle de prothèse (P) est complétée et/ou remplacée par le troisième modèle 3D numérique.

5. Procédé selon une des revendications 1 à 4, **caractérisé en ce que**, avant et/ou après le calcul de l'axe d'insertion (4) et des profondeurs de contre-dépouille, des zones à surveiller sont marquées automatiquement et/ou par le biais d'un moyen de saisie dans le modèle de mâchoire (M2) et des profondeurs de contre-dépouille sont calculées pour ces zones et affichées dans le modèle de mâchoire (M2).

6. Procédé selon une des revendications 1 à 5, **caractérisé en ce que**, avant le calcul de l'axe d'insertion (4), des zones destinées aux éléments de maintien et de support (3) à compléter sont marquées sur le modèle de mâchoire (M2) et prises en compte lors du calcul de l'axe d'insertion (4).

7. Procédé selon une des revendications 1 à 6, **caractérisé en ce que** les profondeurs de contre-dépouille sont visualisées par une coloration de la surface du modèle de mâchoire (M2) en fausses couleurs.

8. Procédé selon une des revendications 1 à 7, **caractérisé en ce que** des zones susceptibles de provoquer des calages sont déterminées à l'aide du modèle de prothèse (P), du modèle de mâchoire (M2) et de l'axe d'insertion (4) et sont affichées dans le modèle de mâchoire (M2).
